Europäisches Patentamt

European Patent Office

Office européen des brevets

(19)

(11) Numéro de publication: **0 030 489**
**B1**

(12) **FASCICULE DE BREVET EUROPEEN**

(45) Date de publication du fascicule du brevet:
16.05.84

(51) Int. Cl.³: **H 02 B 13/04,** H 02 B 11/12

(21) Numéro de dépôt: **80401638.4**

(22) Date de dépôt: **17.11.80**

(54) **Cellule électrique moyenne tension préfabriquée en usine et son procédé d'assemblage.**

(30) Priorité: **07.12.79 FR 7930541**

(43) Date de publication de la demande:
**17.06.81 Bulletin 81/24**

(45) Mention de la délivrance du brevet:
**16.05.84 Bulletin 84/20**

(84) Etats contractants désignés:
**BE CH DE GB IT LI NL SE**

(56) Documents cités:
**US - A - 2 563 441**
**US - A - 3 116 360**

(73) Titulaire: **MERLIN GERIN, Rue Henri Tarze,**
**F-38050 Grenoble Cedex (FR)**

(72) Inventeur: **Neel, Jean-Philippe, Merlin Gerin Rue Henri**
**Tarze, F-38050 Grenoble Cedex (FR)**

(74) Mandataire: **Kern, Paul et al, Merlin Gerin Sce.**
**Brevets 20, rue Henri Tarze, F-38050 Grenoble Cedex**
**(FR)**

## Cellule électrique moyenne tension préfabriquée en usine, et son procédé d'assemblage

L'invention est relative à une cellule électrique moyenne tension préfabriquée en usine comprenant une enveloppe métallique de logement d'organes électriques de connexion et de couplage associés à leurs dispositifs de commande.

Selon une cellule connue de l'art antérieur, l'enveloppe métallique est formée par un assemblage de tôles constituant un parallélipède droit muni d'une porte d'obturation. Les organes électriques de connexion et de couplage, notamment les isolateurs d'embrochage, le jeu de barres, les transformateurs d'intensité et de potentiel, le sectionneur de mise à la terre sont introduits à l'intérieur de l'enveloppe parallélépipédique. La largeur réduite de la cellule entraîne des difficultés d'accès et prolonge le temps de montage. La fixation des organes électriques s'effectue soit au moyen de pièces auxiliaires de support soudées sur les faces internes de la cellule, soit au moyen de boulons de fixation extérieurs à l'enveloppe. Le premier type de fixation nécessite un revêtement additionnel de peinture, et le deuxième type oblige d'incorporer des cuvettes dans les faces extérieures des flancs pour le logement des têtes de boulons de manière à éviter leur saillie lors de la juxtaposition de plusieurs cellules constitutives d'un tableau moyenne tension.

L'invention a pour but d'éviter les inconvénients précités et de permettre la réalisation d'une cellule économique, à temps de montage réduit, et à enveloppe de structure simplifiée formée par des flancs standards autorisant une diminution du stockage.

La cellule est caractérisée par le fait que l'ossature de ladite enveloppe comporte deux flancs verticaux de structures identiques, espacés dans le sens de la largeur de la cellule, et comprenant chacun un rebord périphérique de renforcement faisant saillie de la partie lisse verticale, tel que le rebord de l'un des flancs de la cellule coopère lors d'une juxtaposition de plusieurs cellules à enveloppes identiques avec la partie lisse du flanc conjugué d'une cellule adjacente avec formation d'un espace transversal intermédiaire de même profondeur pour le logement de la filerie électrique et d'organes auxiliaires.

Selon une caractéristique de l'invention, les rebords de renforcement desdits flancs sont dirigés transversalement dans le même sens et conformés en équerre dont l'une solidaire du premier flanc vient en engagement contre la partie lisse du flanc conjugué de la cellule juxtaposée, et dont l'autre du deuxième flanc est orientée vers l'intérieur de la cellule.

Selon une autre caractéristique de l'invention, chaque flanc métallique comporte une tôle prédécoupée dotée d'une pluralité de mortaises d'emboîtement et de trous circulaires pour l'introduction de moyens de fixation pour l'assemblage desdits organes aux faces internes des flancs. Chaque organe de connexion ou de couplage, notamment des isolateurs d'embrochage, un sectionneur de mise à la terre, est constitué par un sous-ensemble fixé à une platine support pourvue à chacune de ses extrémités latérales opposées de tenons de positionnement, qui s'engagent dans les mortaises correspondantes alignées des flanc lors du montage transversal dudit sous-ensemble entre lesdits flancs, tel que la rigidité mécanique de l'ossature de ladite enveloppe résulte de l'assemblage des flancs verticaux à un plancher horizontal et aux différentes platines des sous-ensembles s'étendant parallèlement au plancher dans le sens de la largeur de la cellule.

Un développement de l'invention concerne le procédé d'assemblage d'une cellule électrique à enveloppe métallique de logement d'organes électriques de connexion et de couplage, qui consiste à utiliser deux flancs maintenus par un outillage dans le sens vertical avec un écartement sensiblement supérieur à la largeur définitive de la cellule.

Durant une deuxième phase on monte les organes électriques de connexion et de couplage sur des platines supports pour former des sous-ensembles distincts positionnés avec un décalage approprié sur un gabarit de montage. Le gabarit équipé des sous-ensembles est introduit pendant une troisième phase entre les flancs écartés jusque dans une position prédéterminée et on provoque ensuite le rapprochement d'au moins un flanc en direction des platines des sous-ensembles. On procède dans la phase finale à la fixation mécanique des sous-ensembles aux faces internes des flancs, puis au retrait du gabarit et de l'outillage.

Selon une caractéristique du procédé d'assemblage, on positionne les platines des sous-ensembles dans des mortaises d'emboîtement ménagées dans les flancs constitués par des tôles prédécoupées de structures identiques et on solidarise ensuite les platines aux flancs par une opération de rivetage pour assurer la rigidité mécanique de l'ossature de l'enveloppe.

D'autres avantages et caractéristiques ressortiront plus clairement de l'exposé qui va suivre de différents modes de mise en œuvre de l'invention, donnés à titre d'exemples non limitatifs et représentés aux dessins annexés, dans lesquels, la

fig. 1 est une vue schématique en coupe d'une cellule départ équipée d'une enveloppe selon l'invention; la

fig. 2 est une vue éclatée en perspective de la cellule illustrée à la fig. 1, le disjoncteur débrochable, le caisson basse tension, le transformateur de potentiel et les câbles de raccordement n'étant pas représentés; la

fig. 3 montre une juxtaposition de trois cellules à enveloppes identiques selon l'invention; la

fig. 4 est une vue partielle d'un flanc de l'enveloppe; les

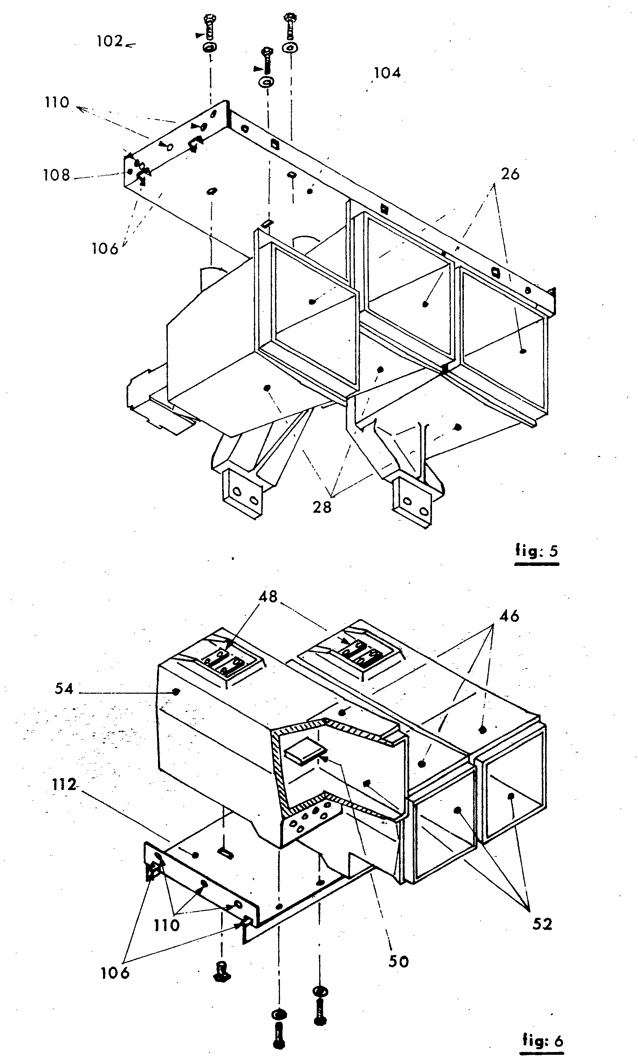

fig. 5 et 6 représentent respectivement les isolateurs d'embrochage inférieur et supérieur fixés sur leurs platines supports; la

fig. 7 montre le gabarit de montage des sous-ensembles et l'outillage de manipulation des flancs de l'enveloppe, utilisés lors de l'assemblage de la cellule, selon l'invention; la. .

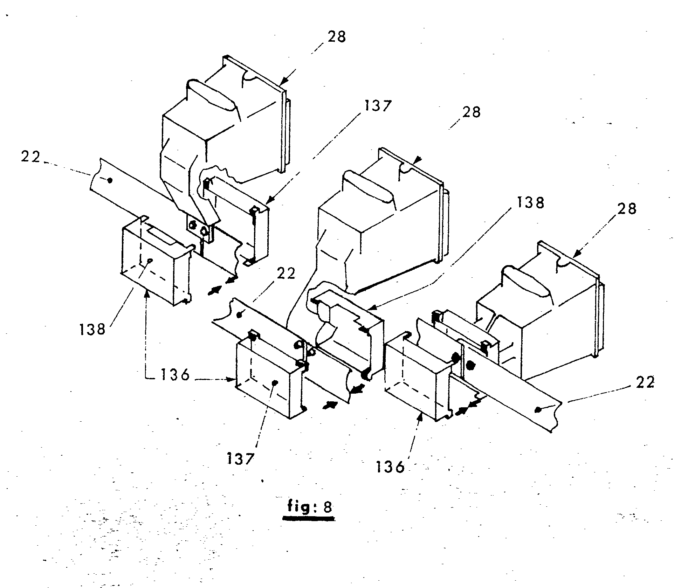

fig. 8 montre une vue en perspective d'un détail de réalisation de l'invention; la

fig. 9 est une vue analogue à celle de la fig. 1, d'une variante de réalisation de l'invention, la

fig. 10 est une vue en perspective d'un transformateur de potentiel débrochable équipant la cellule illustrée à la fig. 9.

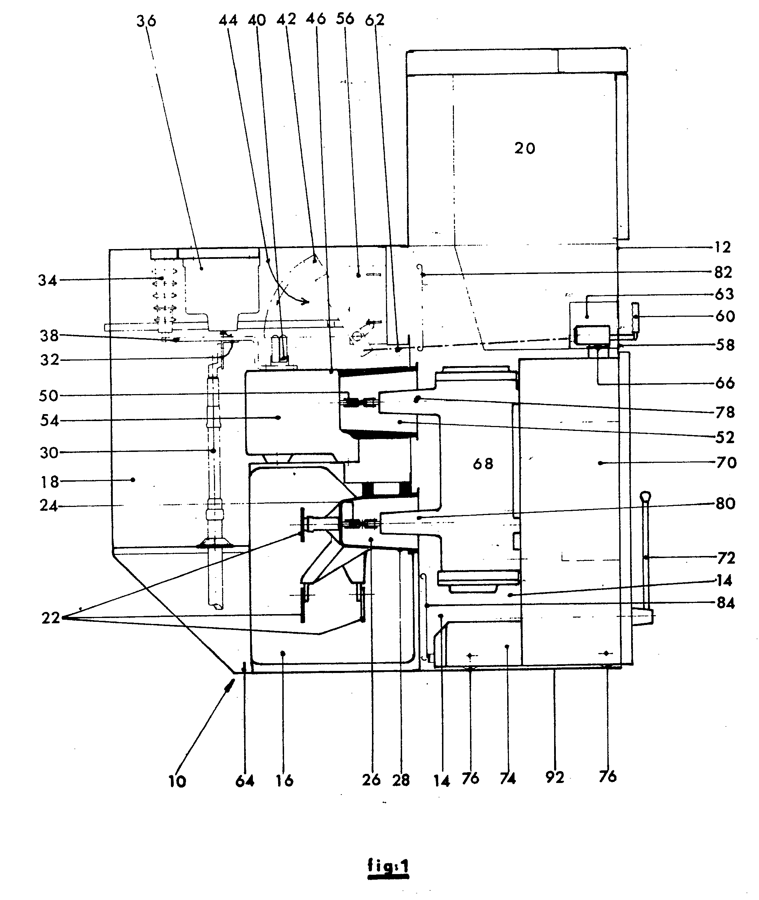

Sur la fig. 1, un tableau à moyenne tension préfabriqué en usine est formé par une juxtaposition de cellules de départ, d'arrivée ou de couplage, à isolement dans l'air, équipées chacune d'un disjoncteur débrochable tripolaire à autosoufflage et à hexafluorure de soufre. A titre d'exemple, on décrira une cellule départ 10 comportant une enveloppe 12 métallique dont l'espace interne est subdivisé en une pluralité de compartiments adjacents, notamment un compartiment disjoncteur 14, un compartiment jeu de barres 16, un compartiment extrémités de câbles 18, et un compartiment à basse tension 20 de contrôle et de protection.

Le compartiment jeu de barres 16 est situé à la partie inférieure de la cellule 10 entre les compartiments extrêmes 14 et 18 et renferme un jeu de barres 22 triphasé relié électriquement à des plots d'embrochage inférieurs 24 s'étendant à l'intérieur d'alvéoles 26 fixes, formés par des isolateurs 28 en forme de cloches en résine moulée.

Le compartiment extrémités de câbles 18 est agencé à la partie arrière de la cellule, à mi-hauteur et comporte un jeu de câbles 30 secs unipolaires dont le point de raccordement 32 de chaque phase est raccordé à un isolateur à diviseur capacitif 34 et un transformateur de potentiel 36 fixe. Un conducteur de liaison 38 relie chaque point de raccordement 32 à un contact fixe 40 coopérant avec un couteau mobile 42 correspondant d'un sectionneur tripolaire 44 fixe pour la mise à la terre des extrémités de câbles 30. Chaque contact fixe 40 du sectionneur de mise à la terre 44 est porté par un isolateur 46 en forme de cloche, en résine moulée, traversé par un conducteur enrobé dont l'une 48 des extrémités est connectée au conducteur de liaison 38 et au contact fixe 40, et dont l'extrémité opposée est conformée en un plot d'embrochage supérieur 50 s'étendant à l'intérieur de l'alvéole 52 de l'isolateur 46 correspondant. Un transformateur de courant 54 du type bobiné est intégré dans chaque isolateur supérieur 46 dont le conducteur noyé correspondant sert d'enroulement primaire. Le mécanisme de manœuvre 56 du sectionneur de mise à la terre 44 est actionné depuis la face avant 58 de la cellule 10 par une poignée de commande 60 accouplée à un levier de transmission 62 susceptible d'assurer le cadenassage du sectionneur 44 en positions d'ouverture et de fermeture. La poignée 60 coopère avec des organes de verrouillage (non représentés), logés dans un boîtier de commande 63. Les isolateurs inférieurs 28 et supérieurs 46 des différentes phases sont échelonnés dans le sens de la largeur de la cellule selon deux nappes superposées s'étendant parallèlement à la direction des barres omnibus 22. Il est clair que les câbles secs 30 unipolaires peuvent être remplacés par des boîtes d'extrémités de câbles unipolaires ou tripolaires à papier imprégné. Un collecteur 64 général de mise à la terre en barres de cuivre non isolées assure le regroupement des circuits et masses métalliques raccordés à la terre.

Le compartiment basse tension 20 est formé par un caisson placé à la partie supérieure avant de la cellule au-dessus du compartiment disjoncteur 14, et renferme l'appareillage basse tension de contrôle et de protection ainsi que les appareils de mesure indicateurs regroupés sur la face avant du caisson. Une liaison déconnectable 66 à prise permet le raccordement ou la déconnexion des auxiliaires basse tension et du disjoncteur extractible.

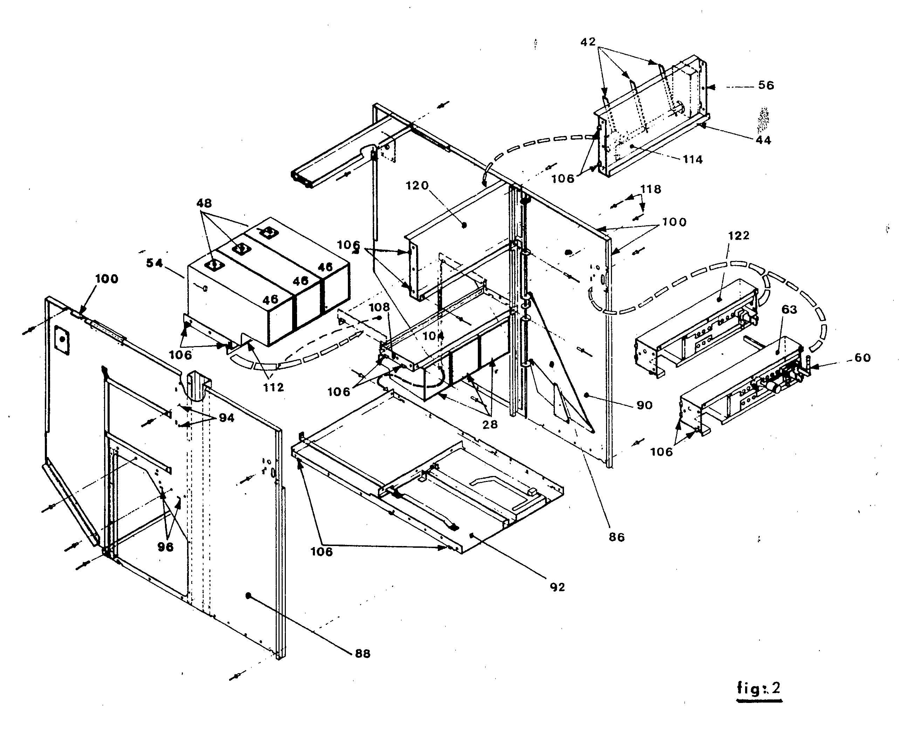

Le compartiment disjoncteur 14 est situé sous le compartiment basse tension 20 et renferme le disjoncteur 68 tripolaire débrochable à enveloppe étanche en résine époxyde remplie d'hexafluorure de soufre. Le mécanisme de commande 70 du disjoncteur 68 est disposé à l'avant de la cellule 10 et comprend un levier 72 de verrouillage du disjoncteur et d'armement manuel du mécanisme 70. L'ensemble disjoncteur 68 et mécanisme de commande 70 est positionné sur un chariot 74 mobile à galets de roulement 76 susceptible d'occuper trois positions distinctes lors de son déplacement en translation horizontale selon la direction de profondeur de la cellule, à savoir une position embrochée de service, une position intermédiaire de sectionnement, et une position débrochée après extraction. En position de service, les deux traversées 78, 80 d'amenée de courant de chaque pôle du disjoncteur 68 pénètrent dans les alvéoles 52, 26 correspondants des isolateurs supérieurs 46 et inférieurs 28, et sont munies à leurs extrémités de pinces d'embrochage coopérant avec les plots d'embrochage supérieurs 50 et inférieurs 24. En position de sectionnement intervenant au début de la course d'extraction du disjoncteur 68, les circuits à moyenne tension sont déconnectés, mais les circuits de commande à basse tension restent branchés pour procéder à des essais de manœuvre à vide du disjoncteur 68. En position d'extraction complète du disjoncteur 68, toute la partie débrochable est séparée du reste de la cellule 10. Un volet d'isolement supérieur 82 et un volet d'isolement inférieur 84 en matériau métallique sont associés dans le compartiment 14 à un dispositif de commande de relevage 86 (fig. 2) pour assurer automatiquement l'obturation des alvéoles 52 et 26 en position d'extraction du disjoncteur 68.

Le fonctionnement d'une telle cellule est classique et découle de manière évidente de la description précédente.

Selon l'invention, l'enveloppe 12 (fig. 1 à 4) de la cellule 10 comporte une ossature métallique formée par deux flancs gauche 88 et droit 90 verticaux, assemblés par rivetage à un plancher 92 horizontal et à une pluralité de platines de support des parties nobles s'étendant parallèlement au plancher 92 dans le sens de la largeur de la cellule 10. Chaque flanc 88, 90 présente une structure identique et comporte une tôle prédécoupée dotée de trous 94 circulaires pour l'introduction de rivets, d'ouvertures rectangulaires jouant le rôle de mortaises 96 et d'autres lumières 98 de dimensions supérieures, pour le passage de la filerie. Le pourtour de chaque flanc 88, 90 est muni d'un rebord de renforcement 100 en forme d'équerre faisant saillie de la partie lisse verticale. Le découpage préalable des tôles est effectué par une maschine automatique à commande numérique permettant d'obtenir un alignement horizontal très précis des mortaises 96 correspondantes des deux flancs 88, 90 lors de l'assemblage de la cellule 10.

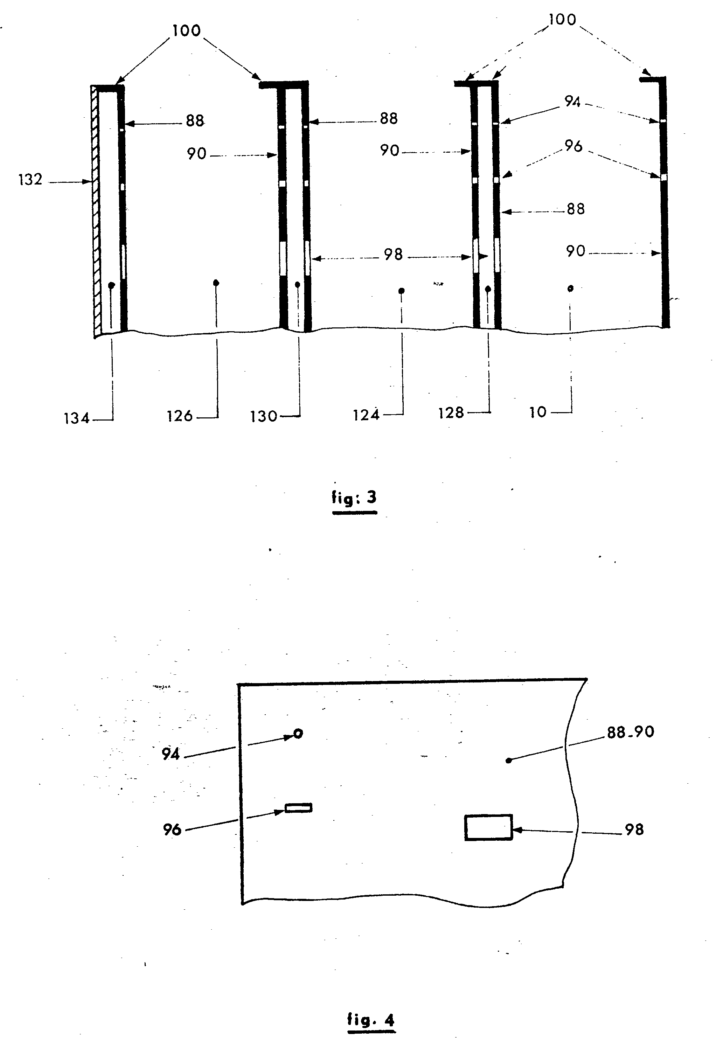

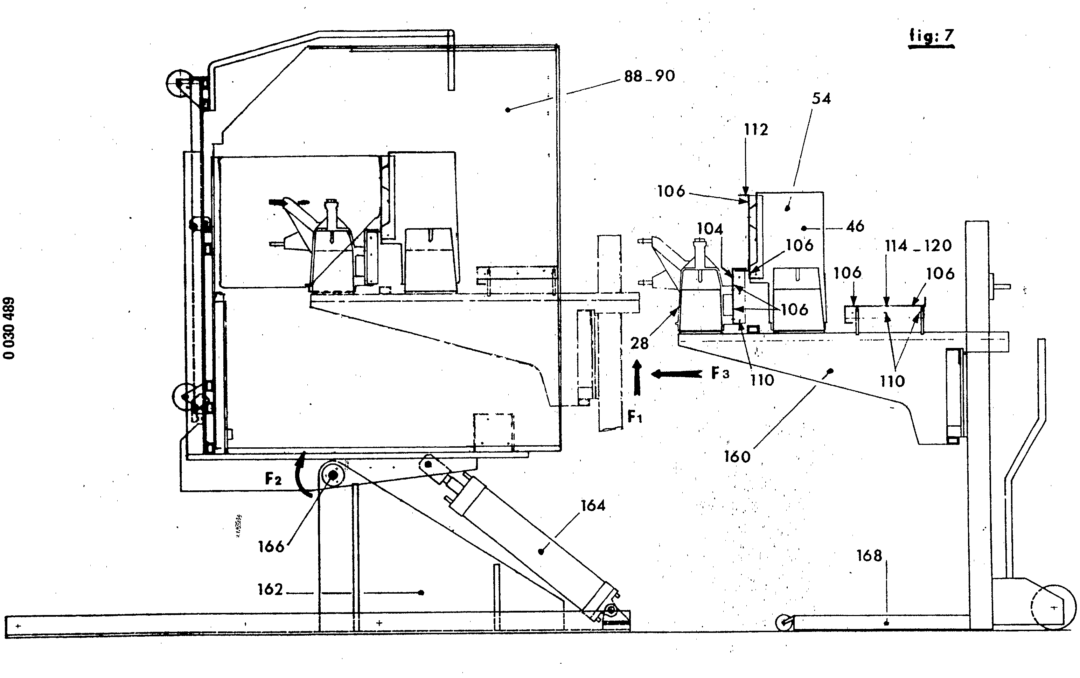

En référence aux fig. 2 et 6, un sous-ensemble est formé par trois isolateurs 28 d'embrochage inférieur fixés par des moyens de fixation 102 à une platine de support 104 pourvue à chacune de ses extrémités latérales opposées d'une paire de tenons 106 et d'une aile 108 en équerre percée de trous 110 (fig. 3). Deux autres sous-ensembles sont constitués par les trois isolateurs 46 d'embrochage supérieur portés par une platine support 112 à tenons 106 (fig. 6) et par le sectionneur de mise à la terre 44 agencé sur une platine 114 à tenons 106. Ces sous-ensembles portent les parties nobles de la cellule et sont dans un premier stade préassemblés sur leurs platines respectives 104, 112, 114 à l'extérieur de la cellule 10. Dans un deuxième stade, les sous-ensembles sont convenablement positionnés sur un gabarit de montage 160 (fig. 7), qui épouse la forme des cloches des isolateurs 28, 46 d'embrochage inférieur et supérieur et respecte le décalage appropié entre les différents sous-ensembles à l'intérieur de la cellule. Un outillage 162 maintient les flancs 88, 90 parallèlement dans le sens vertical avec un écartement légèrement supérieur à la largeur finale de la cellule, et assure ensuite leur translation verticale vers le haut (flèche F₁) suivie d'un mouvement de pivotement simultané vers l'avant (flèche F₂) selon un angle droit, opéré par des vérins 164 de commande autour d'un axe 166 horizontal perpendiculaire aux faces internes conjuguées des flancs. Dans un troisième stade, le gabarit de montage 160, équipé des sous-ensembles, est introduit au moyen d'un chariot mobile 168 (flèche F₃) entre les deux flancs 88, 90 écartés, et est positionné de manière précise en regard des mortaises 96 alignées. L'introduction des tenons 106 des différentes platines 104, 112, 114 dans les mortaises 96 correspondantes s'effectue par rapprochement d'un ou de deux flancs 88, 90, suivi de l'assemblage final par introduction de rivets 118 de fixation dans les trous 94 et 110 alignés des flancs 88, 90 et des platines 104, 112, 114. L'ossature métallique de l'enveloppe 12 présente alors une rigidité mécanique convenable. Les tenons 106 de positionnement des autres organes de la cellule, notamment du boîtier de commande 63 du sectionneur de mise à la terre 44, sont ensuite engagés dans les mortaises 96 correspondantes après déformation élastique des flancs 88, 90, suivie de l'opération de fixation locale par rivetage.

Le procédé d'assemblage a été décrit pour une cellule départ, mais il est évident qu'il s'applique à tout autre type de cellule préfabriquée, notamment d'arrivée ou de couplage. L'absence de sectionneur de mise à la terre 44 dans l'agencement de la cellule entraîne la mise en place d'une platine 120 nue à tenons 106, de structure identique à celle 114 de la variante avec sectionneur (voir vue en perspective éclatée de la fig. 2). Un boîtier de commande 122 simplifié est alors prévu en remplacement du boîtier 63.

Ce procédé d'assemblage permet l'utilisation de tôles prépeintes de structures rigoureusement identique entraînant la suppression de toute opération ultérieure de peinture et une diminution du stockage et du temps de montage.

La fig. 3 montre une vue partielle schématique en coupe d'un tableau moyenne tension comprenant trois cellules de départ 10 et d'arrivée 124, 126. Le rebord de renforcement 100 de chaque flanc 88, 90 est toujours dirigé dans le même sens de manière à coopérer avec la face lisse du flanc de la cellule juxtaposée avec formation d'un espace intermédiaire 128, 130. Le rebord 100 du flanc 88 de la cellule 126 vient en engagement avec une plaque lisse de fermeture 132 pour constituer un espace 134 extrême. Les trois espaces 128, 130, 134 forment des goulottes transversales de logement de la filerie électrique.

Le jeu de barres 22 triphasé est avantageusement protégé par des capots 136 en matériau isolant et de form parallélépipédique. Chaque capot 136 est formé par deux moitiés 137, 138, en forme de U, susceptibles de s'encliqueter l'une dans l'autre avec interposition de la barre omnibus 22 correspondante. Cette dernière est ainsi entourée par le capot 136 isolant au voisinage de la connexion électrique de la barre 22 avec le conducteur de l'isolateur d'embrochage inférieur 28 correspondant.

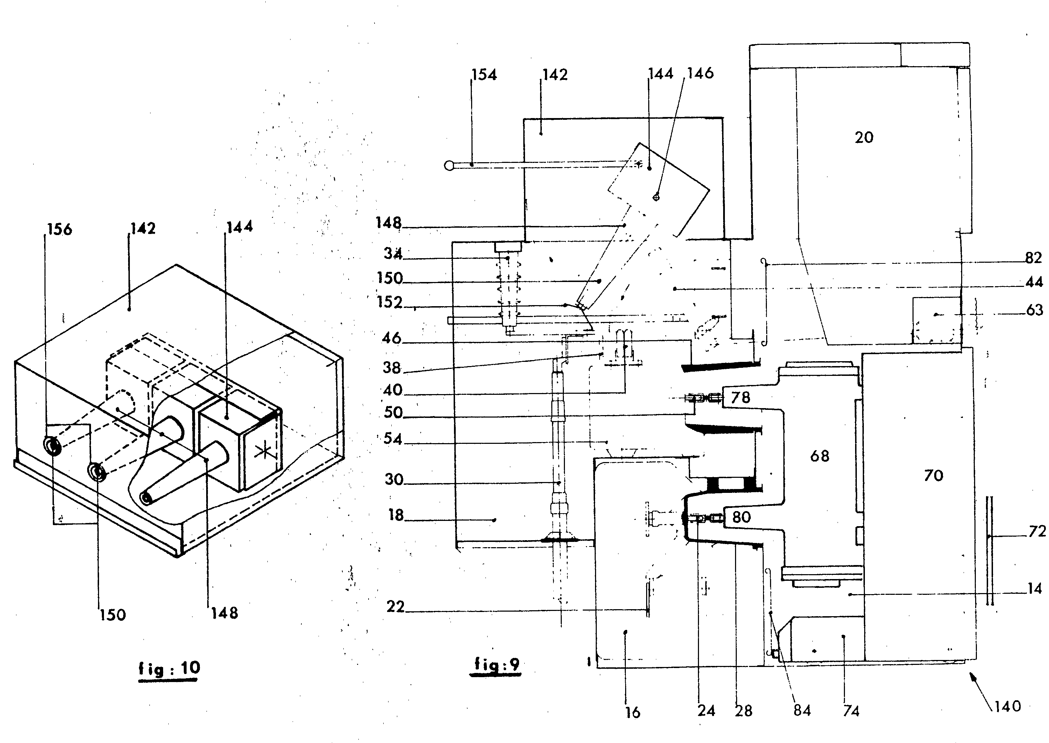

Selon la variante de réalisation d'une cellule de départ 140 (fig. 9 et 10), les mêmes repères désignent des pièces identique ou similaires, qui ne seront plus décrites en détail par la suite. En remplacement du transformateur de potentiel 36 fixe de la cellule 10 illustrée à la fig. 1, la cellule 140 (fig. 9) est équipée au-dessus du compartiment 18 d'un compartiment additionnel 142 renfermant un transformateur de potentiel 144 débrochable du type basculant tripolaire. Le transformateur 144 est monté à pivotement limité autour d'un axe 146 entre une position abaissée active (fig. 9) et une position relevée inactive (fig. 10), et comprend par pôle une traversée 148 dotée d'un puits de logement d'un fusible 150. Chaque conducteur de liaison 38 porte un contact auxiliaire 152, qui coopère avec la traversée 148 correspondante en position active du transformateur 144. Lors de la fusion d'un fusible 150, le transformateur 144 basculant est relevé en position inactive au moyen d'un levier de commande 154 pour positionner les traversées 148 en regard d'orifices 156 circulaires ménagés dans le compartiment 142. Le remplacement du fusible 150 défectueux s'effectue au moyen d'un outil introduit dans l'orifice 156 correspondant.

## Revendications

1. Cellule electrique moyenne tension préfabriquée en usine comprenant une enveloppe (12) métallique de logement d'organes électriques de connexion et de couplage associés à leurs dispositifs de commande, caractérisée par le fait que l'ossature de ladite enveloppe (12) comporte deux flancs (88, 90) verticaux de structures identiques, espacés dans le sens de la largeur de la cellule, et comprenant chacun un rebord (100) périphérique de renforcement faisant saillie de la partie lisse verticale, tel que le rebord de l'un (88) des flancs de la cellule (10) coopère lors d'une juxtaposition de plusieurs cellules à enveloppes identiques avec la partie lisse du flanc conjugé (90) d'une cellule (124) adjacente avec formation d'un espace transversal intermédiaire (128) de même profondeur pour le logement de la filerie électrique et d'organes auxiliaires.

2. Cellule électrique selon la revendication 1, caractérisée par le fait que les rebords de renforcement (100) desdits flancs (88, 90) sont dirigés transversalement dans le même sens et conformés en équerre dont l'une solidaire du premier flanc (88) vient en engagement contre la partie lisse du flanc (90) conjugué de la cellule juxtaposée, et dont l'autre du deuxième flanc (90) est orientés vers l'intérieur de la cellule.

3. Cellule électrique selon la revendication 1 ou 2, caractérisée par le fait que chaque flanc (88, 90) métallique comporte une tôle prédécoupés dotée d'une pluralité de mortaises (96) d'emboîtement, et de trous (94) circulaires pour l'introduction de moyens de fixation (118) pour l'assemblage desdits organes aux faces internes des flancs (88, 90).

4. Cellule électrique selon la revendication 3, caractérisée par le fait que chaque organe de connexion ou de couplage, notamment des isolateurs d'embrochage (28, 46), un sectionneur de mise à la terre (44), est constitué par un sous-ensemble fixé à une platine support (104, 112, 114) pourvue à chacune de ses extrémités latérales opposées de tenons de positionnement (106), qui s'engagent dans les mortaises (96) correspondantes alignées des flancs (88, 90) lors du montage transversal du sous-ensemble entre lesdits flancs, tel que la rigidité mécanique de l'ossature de ladite enveloppe (12) résulte de l'assemblage des flancs verticaux (88, 90) à un plancher (92) horizontal et aux différentes platines (104, 112, 114) des sous-ensembles s'étendant parallèlement au plancher dans le sens de la largeur de la cellule.

5. Cellule électrique selon la revendication 4, caractérisée par le fait que lesdits moyens de fixation (118) des platines support (104, 112, 114) aux flancs (88, 90) comportent des rivets d'assemblage mis en place après introduction des tenons de positionnement (106) dans les mortaises (96) correspondantes.

6. Cellule électrique selon l'une des revendications 1 à 5, comprenant un compartiment (16) jeu de barres, renfermant des barres omnibus (22) triphasées branchées électriquement à des plots d'embrochage (24) entourés par des isolateurs (28) en forme de cloches, caractérisées par le fait que chaque barre (22) est entourée au voisinage de sa connexion électrique avec le plot (24) correspondant d'un capot de protection (136), en matériau isolant formé par deux moitiés (137, 138) en forme de U susceptibles de s'encliqueter l'une dans l'autre.

7. Cellule électrique selon l'une des revendications 1 à 5, dotée d'un compartiment additionnel (142) de logement de transformateur de potentiel (144) tripolaire débrochable, comprenant par pôle une traversée (148) à puits renfermant un fusible (150) de protection, caractérisée par le fait que ledit transformateur (144) est monté à basculement autour d'un axe transversal (146) entre une position active de connexion avec les câbles (30) de raccordement, et une position inactive de déconnexion assurant le positionnement desdites traversées (148) en regard d'orifices (156) ménagés dans le compartiment (142) pour permettre le remplacement d'un fusible (150) défectueux.

8. Procédé d'assemblage d'une cellule électrique à enveloppe métallique de logement d'organes électriques de connexion et de couplage, caractérisé par les opérations suivantes:

— un outillage (162) maintient dans une première phase deux flancs (88, 90) parallèles de l'enveloppe (12) dans le sens vertical avec un écartement sensiblement supérieur à la largeur définitive de la cellule,

— durant une deuxième phase, on monte les organes électriques de connexion et de couplage sur des platines supports (104, 112, 114) pour former des sous-ensembles distinots positionnés avec un décalage approprié sur un gabarit de montage (160),

— le gabarit équipé des sous-ensembles est introduit pendant une troisième phase entre les flancs (88, 90) écartés jusque dans une position prédéterminée, et von provoque ensuite le rapprochement d'au moins un flanc en direction des platines des sous-ensembles,

— on procède dans la phase finale à la fixation mécanique des sous-ensemble aux faces internes des flancs (88, 90), puis au retrait du gabarit et de l'outillage.

9. Procédé d'assemblage selon la revendication 8, caractérisé en ce qu'on positionne les platines des sous-ensembles dans des mortaises d'emboîtement ménagées dans les flancs (88, 90), constitués par des tôles prédécoupées de structures identiques, et qu'on solidarise ensuite les platines (104, 112, 114) aux flancs (88, 90) par une opération de rivetage pour assurer la rigidité mécanique de l'ossature de l'enveloppe.

10. Procédé d'assemblage selon la revendication 8 ou 9, caractérisé en ce que l'outillage (162) assure durant la première phase une double manipulation coplanaire de chaque flanc (88, 90) sonsistant en un premier mouvement de translation vers le haut suivi d'un deuxième mouvement de pivotement à angle droit opéré dans un même plan autour d'un axe transversal (166).

## Patentansprüche

1. Im Werk vorgefertigte elektrische Mittelspannungs-Schaltzelle mit einem Metallgehäuse (12) zur Unterbringung der elektrischen Verbindungs- und Schaltelemente und deren Steuervorrichtungen, dadurch gekennzeichnet, daß das Gerüst des genannten Gehäuses (12) zwei vertikale Flanken (88, 90) von gleicher Struktur aufweist, die in der Breitenrichtung der Zelle mit Abstand angeordnet sind und von denen jede einen umlaufenden Verstärkungswulst (100) aufweist, welcher aus dem glatten senkrechten Teil herausragt, so daß der Wulst der einen Flanke (88) der Schaltzelle (10) im Falle von mehreren nebeneinander angeordneten Schaltzellen mit identischen Gehäusen mit dem glatten Teil der zugeordneten Flanke (90) einer angrenzenden Schaltzelle (124) zusammenarbeitet, mit Entstehen eines querliegenden Zwischenraumes (128) von gleicher Tiefe für die Unterbringung der elektrischen Kabel und der Hilfselemente.

2. Elektrische Schaltzelle nach Anspruch 1, dadurch gekennzeichnet, daß die Verstärkungswülste (100) der Flanken (88, 90) quer in die gleiche Richtung gerichtet sind, und daß sie als umgebogener Rand ausgebildet sind, von denen der mit der ersten Flanke (88) verbundene Rand gegen den glatten Teil der zugeordneten Flanke (90) der daneben angeordneten Schaltzelle kommt, und von denen der andere Rand der zweiten Flanke (90) in das Innere der Schaltzelle gerichtet ist.

3. Elektrische Schaltzelle nach Anspruch 1 oder 2, dadurch gekennzeichnet, daß jede metallische Flanke (88, 90) ein vorzerschnittenes Blech aufweist, ausgestattet mit einer Mehrzahl von Einfügungsschlitzen (96) und runden Löchern (94) zum Einführen von Befestigungsmitteln (118) für die Verbindung der genannten Elemente mit den inneren Flächen der Flanken (88, 90).

4. Elektrische Schaltzelle nach Anspruch 3, dadurch gekennzeichnet, daß jedes Verbindungs- oder Schaltelement, insbesondere die Einfahrisolatoren (28, 46), ein Erdungstrennschalter (44), aus einer Untergruppe besteht, die an einer Stützplatte (104, 112, 114) befestigt ist, welche an jedem ihrer seitlichen entgegengesetzten Enden mit Positionierungszapfen (106) versehen ist, die anläßlich der transversalen Montage der Untergruppe zwischen die genannten Flanken in die entsprechenden ausgerichteten Schlitze (96) der Flanken (88, 90) eingreifen, so daß sich die mechanische Festigkeit des Gerüstes des genannten Gehäuses (12) aus dem Zusammenfügen der senkrechten Flanken (88, 90) mit einem waagerechten Boden (92) und mit verschiedenen Platten (104, 112, 114) der Untergruppen ergibt, die sich parallel zum Boden in Breitenrichtung der Schaltzelle erstrecken.

5. Elektrische Schaltzelle nach Anspruch 4, dadurch gekennzeichnet, daß die genannten Befestigungsmittel (118) der Stützplatten (104, 112, 114) an die Flanken (88, 90) Verbindungsnieten aufweisen, die nach Einführung der Positionierungszapfen (106) in die entsprechenden Schlitze (96) angebracht werden.

6. Elektrische Schaltzelle nach einem der Ansprüche 1—5, mit einem Sammelschienenabteil (16), welches dreiphasige Sammelschienen (22) umschließt, die elektrisch an Einfahrkontakte (24) angeschlossen sind, die von glockenförmigen Isolatoren (28) umgeben sind, dadurch gekennzeichnet, daß jede Schiene (22) in der Nähe ihres elektrischen Anschlusses an den entsprechenden Kontakt (24) von einer Isolierschutzhaube (136) umgeben ist, aus zwei U-förmigen Hälften (137, 138) bestehend, die ineinander einrasten können.

7. Elektrische Schaltzelle nach einem der Ansprüche 1—5, ausgestattet mit einem zusätzlichen Abteil (142) für die Unterbringung des dreipoligen ausziehbaren Spannungswandlers (144), der je Pol eine Hohldurchführung (148) aufweist, die eine Sicherung (150) einschließt, dadurch gekennzeichnet, daß der genannte Wandler (144) schwenkbar um eine transversale Achse (146) montiert ist, zwischen einer aktiven Verbindungsstellung mit den Anschlußkabeln (30) und einer Unterbrechungsstellung, welche die Positionierung der genannten Durchführungen (148) gegenüber von den in dem Abteil (142) angebrachten Öffnungen (156) gewährleistet, um ein Auswechseln einer schadhaften Sicherung (150) zu ermöglichen.

8. Montageverfahren einer elektrischen Schaltzelle mit einem Metallgehäuse zur Unterbringung von elektrischen Verbindungs- und Schaltelementen, durch folgende Vorgänge gekennzeichnet:

— ein Werkzeug (162) hält während einer ersten Phase zwei parallele Flanken (88, 90) des Gehäuses (12) in senkrechtem Sinn, mit einem Abstand, der bedeutend größer ist, als die endgültige Breite der Schaltzelle,
— während einer zweiten Phase werden die elektrischen Verbindungs- und Schaltelemente auf die Stützplatten (104, 112, 114) montiert, um unterschiedliche Untergruppen zu bilden, die mit zweckmäßiger Verschiebung auf einer Montagevorrichtung (160) positioniert sind,

— die mit den Untergruppen ausgestattete Vorrichtung wird während einer dritten Phase zwischen die gespreizten Flanken (88, 90) eingeführt bis zu einer vorbestimmten Stellung, und dann bewirkt man die Annäherung von wenigstens einer Flanke in Richtung der Platten der Untergruppen,

— in der letzten Phase unternimmt man die mechanische Befestigung der Untergruppen an den Innenseiten der Flanken (88, 90), und dann die Wegnahme der Vorrichtung und des Werkzeuges.

9. Montageverfahren nach Anspruch 8, dadurch gekennzeichnet, daß man die Platten der Untergruppen in den Einfügungsschlitzen der Flanken (88, 90) positioniert, welche aus vorzerschnittenen Blechen gleicher Struktur bestehen, und daß man dann die Platten (104, 112, 114) an den Flanken (88, 90) durch ein Nietverfahren befestigt, um die mechanische Festigkeit des Gehäusegerüstes zu gewährleisten.

10. Montageverfahren nach Anspruch 8 oder 9, dadurch gekennzeichnet, daß das Werkzeug (162) während der ersten Phase eine doppelte koplanare Manipulation jeder Flanke (88, 90) gewährleistet, bestehend aus einer ersten Verschiebungsbewegung nach oben, gefolgt von einer zweiten rechtwinkligen Schwenkbewegung, die auf einer gleichen Ebene um eine transversale Achse (166) ausgeführt wird.

## Claims

1. Factory assembled medium voltage electric cell comprising a metal housing (12) to locate connecting and coupling electric members associated with their operation devices, characterized in that the frame of said housing (12) comprises two vertical sides (88, 90) of identical structures, far apart in the direction of the width cell, and each one comprising a peripheral edge (100) of strengthening protruding from vertical smooth part, so that the edge of one (88) of the cell sides (10) cooperates, when several cells with identical housings come together, with the smooth part of the conjugated side (90) of an adjacent cell (124) building an intermediate cross-interval (128) of same deepth to place the electric wiring and auxiliary members.

2. Electric cell according to claim 1, characterized in that the strengthening edges (100) of said sides (88, 90) are cross-oriented in the same direction and shaped at right angles, the one rigidly secured to the first side (88) of which is brought into engagement against the smooth part of the conjugated side (90) of the juxtaposed cell, and the other of the second side (90) of which is oriented toward the cell inner.

3. Electric cell according to claim 1 or 2, characterized in that each metal side (88, 90) is made up of a precut plate-sheet equipped with a plurality of joint mortises (96) and circular holes (94) to introduce fixing means (118) for the assembly of said members into the inner faces of the sides (88, 90).

4. Electric cell according to claim 3, characterized in that each connecting or coupling member, in particular disconnect insulators (28, 46), an earthing switch (44), comprises a sub-group fastened to a support plate (104, 112, 114) equipped with positioning tenons (106) at each of its opposed side-ends, which fit into the aligned corresponding mortises (96) of the sides (88, 90) when the sub-group is cross-mounted between said sides, such as the mechanical strength of the frame of said housing (12) results from the assembly of vertical sides (88, 90) to an horizontal floor (92) and to the different plates (104, 112, 114) of the sub-groups stretching parallel to the floor in the direction of the width cell.

5. Electric cell according to claim 4, characterized in that said fixing means (118) of the support plates (104, 112, 114) to the sides (88, 90) comprise assembly rivets mounted after introducing positioning tenons (106) inside the corresponding mortises (96).

6. Electric cell according to one of the claims 1 to 5, comprising a bar system compartment (16), enclosing three-phase bus-bars (22) electrically connected to disconnect fixed contacts (24) surrounded by bell-shaped insulators (28), characterized in that each bar (22) is surrounded near its electric connection with the corresponding fixed contact (24) by a protection cap (136) of insulating material, formed by two U-shaped halfs (137, 138) one likely to latch in the other.

7. Electric cell according to one of the claims 1 to 5, being equipped with an additional compartment (142) to put draw-out triple-pole potential transformer (144), comprising by pole a well-type bushing (148) containing a protection fuse element (150), characterized in that said transformer (144) is mounted in tipping round a cross-axis (146) between a connection active position with the connection cables (30), and a disconnection inactive position ensuring the positioning of said bushings (148) facing ports (156) accommodates inside the compartment (142) to allow the replacement of a faulty fuse element (150).

8. Assembly process of an electric cell with metal housing to place connecting and coupling members, characterized by the following operations:

— a set of tools (162) holds in a first stage two parallel sides (88, 90) of the housing (12) in the vertical direction with a spacing slightly above the final width of the cell,

— during a second stage, the connecting and coupling electric members are mounted on support plates (104, 112, 114) to form positioned distinct sub-groups with an appropriate shift on a mounting gauge (160),

— the gauge equipped with sub-groups is introduced during a third stage between the spaced sides (88, 90) up to a predetermined position, and then the closeness of a side is at least caused in direction of the sub-groups plates,

— during the last stage the sub-groups are mechanically secured to the inner faces of the sides (88, 90) and thereafter the tools and the gauge are withdrawn.

9. Assembly process according to claim 8, characterized in that the plates of the sub-groups are positioned in joint mortises accommodated inside the sides (88, 90) made by precut plate-sheets of identical structures, and that the plates (104, 112, 114) are then rigidly locked with the sides (88, 90) by a riveting operation to ensure the mechanical strength of the housing frame.

10. Assembly process according to claim 8 or 9, characterized in that the set of tools (162) ensures during the first stage a double coplanar manipulation of each side (88, 90) consisting of a first translation move toward the top followed by a second rotation move at right angle carried out in a same plane round a cross-axis (166).

fig. 1

fig. 2

0 030 489

fig: 3

fig. 4

fig: 5

fig: 6

fig:7

**fig: 8**

21

0 030 489

fig : 10

fig : 9